# EUROPEAN PATENT SPECIFICATION

(11) **EP 4 451 084 B1**
(45) Date of publication and mention of the grant of the patent: **04.11.2026**
(21) Application number: 22907350.7
(22) Date of filing: 08.12.2022
(51) Int. Cl.: G05D 1/248, G05D 1/646, B62D 6/00, G05D 105/28, G05D 107/70, G05D 109/10

(54) **TRAVEL SYSTEM FOR TRANSPORT VEHICLE**
FAHRSYSTEM FÜR EIN TRANSPORTFAHRZEUG
SYSTÈME DE DÉPLACEMENT POUR VÉHICULE DE TRANSPORT

(30) Priority: 14.12.2021 JP 2021202938
(43) Date of publication of application: 23.10.2024
(73) Proprietor: Hitachi Construction Machinery Co., Ltd., Tokyo 110-0015 (JP)
(72) Inventor: OBARA, Hiroki, Tokyo 100-8280 (JP); KANAI, Masaki, Tokyo 100-8280 (JP); BANDO, Mikio, Tokyo 100-8280 (JP); UOTSU, Shinichi, Tsuchiura-shi, Ibaraki 300-0013 (JP)
(74) Representative: MERH-IP Matias Erny Reichl Hoffmann Patentanwälte PartG mbB
(86) International application number: PCT/JP2022/045282
(87) International publication number: WO 2023/112823

(56) References cited:
- WO-A1-2012/164691
- WO-A1-2021/145229
- AU-A1- 2019 422 842
- JP-A- 2020 087 340
- JP-A- 2020 087 340
- JP-A- 2021 181 301
- JP-B2- 6 426 941

## Description

### Technical Field

The present invention relates to travel systems for hauling vehicle.

### Background Art

A hauling system has been known, in which a hauling vehicle such as a dump truck runs autonomously or runs while receiving a driving support from outside at a work site such as an open pit mine, and the hauling vehicle is connected to a control unit that manages the travel of the hauling vehicle via a wireless communication line.

The hauling vehicle travels according to a predetermined target trajectory, and if the actual traveling trajectory deviates from the target trajectory by more than a certain distance, the system determines that the vehicle has deviated from the trajectory and stops the vehicle. Stopping of hauling vehicles leads to a reduction in operating time, which causes a drop in productivity. The response of the steering device of a hauling vehicle may deteriorate due to changes in the viscosity of the hydraulic fluid caused by changes in environmental temperature or other factors, or due to a heavy weight of the load on the hauling vehicle. If the response of the steering device of a hauling vehicle decreases, the tracking performance to the target trajectory will deteriorate, and the frequency of track deviations may increase.

Patent Literature 1 discloses a conventional control system for unmanned vehicles. The control system for unmanned vehicles disclosed in Patent Literature 1 includes: a travel command unit that outputs a travel command to control the travel speed of an unmanned vehicle; a steering command unit that outputs a steering command to control a steering device of the unmanned vehicle; a responsiveness calculation unit that calculates steering responsiveness of the steering device based on a target value of the steering device and a detection value of the steering device detected while the unmanned vehicle is running; a determination unit that determines whether the steering responsiveness satisfies a restriction condition; and a restriction command unit that outputs a restriction command for restricting the travel speed when the steering responsiveness satisfies the restriction condition.

Patent Literature 2 discloses a control system for an unmanned vehicle provided with: a travel command unit; a steering command unit; a responsiveness calculation unit; a determination unit that determines whether the steering responsiveness satisfies a limit condition; and a limit command unit.

Patent Literature 3 discloses a verification of operation at the time of a component of an autonomous travel system having change in a delivery vehicle which carries out an autonomous run.

Patent Literature 4 discloses a controller improved for returning, to an original position, an automatic travel service car deviated from a target travel route.

### Citation List

### Patent Literature

Patent Literature 1: JP 2020-115281 A
Patent Literature 2: AU 2019 422 842 A1
Patent Literature 3: JP 6 426941 B2
Patent Literature 4: JP 2020 087340 A

### Summary of Invention

### Technical Problem

The control system for unmanned vehicles disclosed in Patent Literature 1 reduces the vehicle speed if the responsiveness of the steering system decreases to keep the tracking performance to the target trajectory. This may degrade the productivity.

In view of the above, the present invention aims to provide a travel system for hauling vehicle that is capable of keeping the tracking performance to a target trajectory while suppressing a decrease in vehicle speed.

### Solution to Problem

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. To solve the above problem, a travel system for hauling vehicle according to the present invention is mounted on a hauling vehicle and lets the hauling vehicle travel along a target trajectory. The travel system includes: a position sensor that measures a vehicle position of the hauling vehicle; a storage device that stores a curvature indicating a degree of curve of the target trajectory calculated for each of nodes making up the target trajectory; and a control device that controls travel of the hauling vehicle based on the vehicle position and the curvature, the control device including: a target point setting section configured to set a target point, which is a point through which the hauling vehicle passes, on the target trajectory ahead of the vehicle position; and a vehicle control section configured to control the travel of the hauling vehicle so that the hauling vehicle travels from the vehicle position to the target point, when the curvature at a node ahead of the vehicle position is less than a threshold value, the target point setting section setting the target point at a location farther from the vehicle position than when the curvature is equal to or greater than the threshold value.

### Advantageous Effects of Invention

The present invention provides a travel system for hauling vehicle that is capable of keeping the tracking performance to a target trajectory while suppressing a decrease in vehicle speed.

Other problems, configurations and advantageous effects will be clear from the following descriptions of the embodiments.

### Brief Description of Drawings

Fig. 1 describes a hauling system according to Embodiment 1.
Fig. 2 describes a haul road shown in Fig. 1.
Fig. 3 is a block diagram showing the configuration of the travel system for hauling vehicle according to Embodiment 1.
Fig. 4 shows the road information stored in the storage device shown in Fig. 3.
Fig. 5 illustrates virtual and target points.
Fig. 6 shows the relationship between the rate of change in forward travel time and the curvature.
Fig. 7 shows the relationship between the rate of change in forward travel time and the steering angle speed.
Fig. 8 shows the relationship between the rate of change in forward travel time and the load.
Fig. 9 illustrates one method of calculating the target steering angle value.
Fig. 10 is a flowchart of the target point calculation process performed by the target point setting section shown in Fig. 3.
Fig. 11 is a flowchart of the target steering angle value calculation process performed by the control target value calculation section shown in Fig. 3.
Fig. 12 describes a hauling system according to Embodiment 2.
Fig. 13 is a block diagram showing the configuration of the travel system for hauling vehicle according to Embodiment 2.
Fig. 14 shows the road information stored in the storage device shown in Fig. 13.

### Description of Embodiments

### [Embodiment 1]

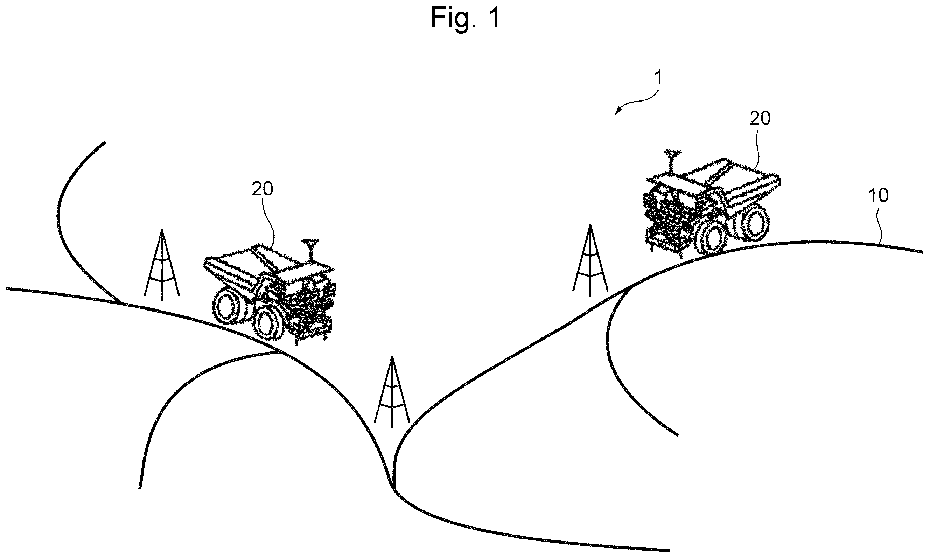

Referring to Figs. 1 to 11, the following describes a travel system 200 for a hauling vehicle 20 according to Embodiment 1.

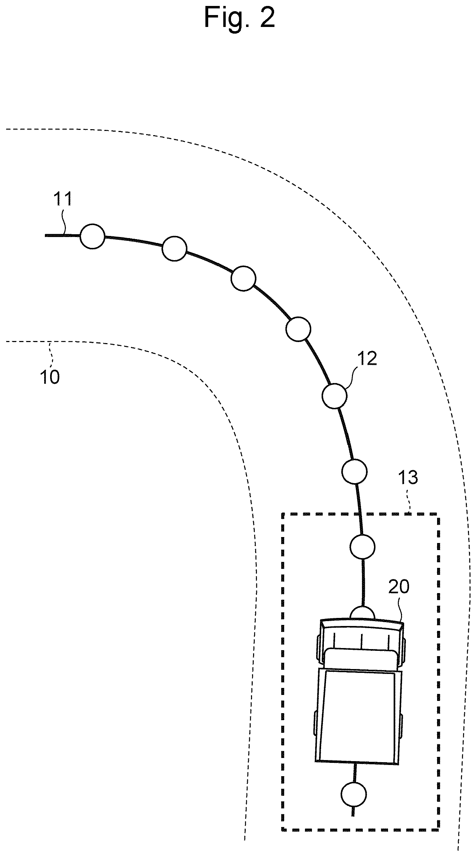

Fig. 1 describes a hauling system 1 according to Embodiment 1. Fig. 2 describes a haul road 10 shown in Fig. 1.

The hauling system 1 includes at least one hauling vehicle 20 that transports load such as earth and sand or ore at a work site such as an open pit mine. The hauling vehicle 20 is a vehicle for transportation such as a dump truck that travels autonomously. Alternatively, the hauling vehicle 20 may be a vehicle that travels while receiving a driving support from a controller that manages the travel of the hauling vehicle 20. The hauling vehicle 20 travels along a haul road 10 that is preset based on the topography of the work site.

As shown in Fig. 2, the haul road 10 has a target trajectory 11, nodes 12, and a travel section 13. The target trajectory 11 is data indicating a trajectory on which the hauling vehicle 20 should travel within the haul road 10. The target trajectory 11 may be data indicating a trajectory in a straight line or a curved shape, or may be data indicating a trajectory in a band shape with a width in the width direction of the haul road 10. The nodes 12 are coordinate data indicating points on the target trajectory 11. As shown in Fig. 2, the target trajectory 11 of the present embodiment is a curve passing through the center in the width direction of the haul road 10, and the nodes 12 are placed at regular intervals on the target trajectory 11.

The travel section 13 is an area obtained by dividing the haul road 10. The travel section 13 is set so that only one hauling vehicle 20 travels in one travel section 13. That is, the travel section 13 is an area set so that the hauling vehicles 20 travel without interfering with each other. One travel section 13 may be set for one node 12, or one travel section 13 may be set for multiple nodes 12.

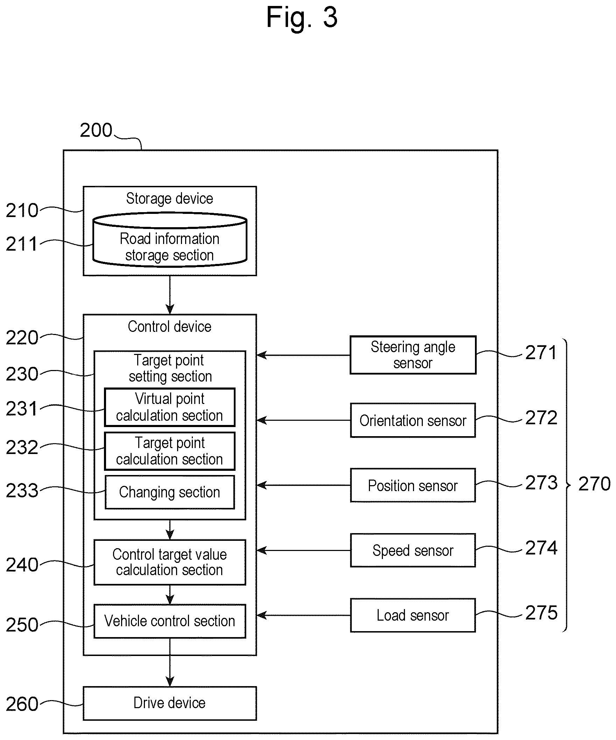

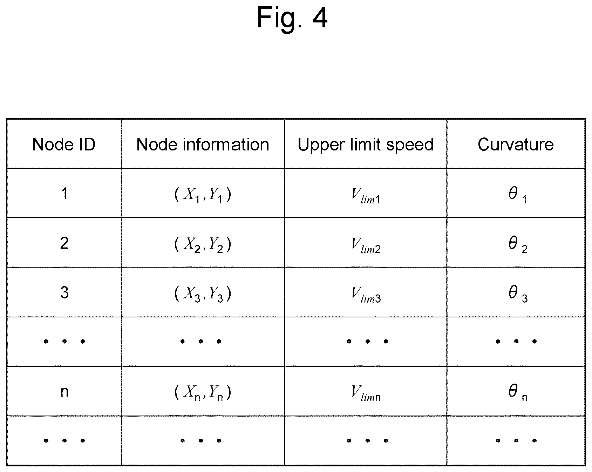

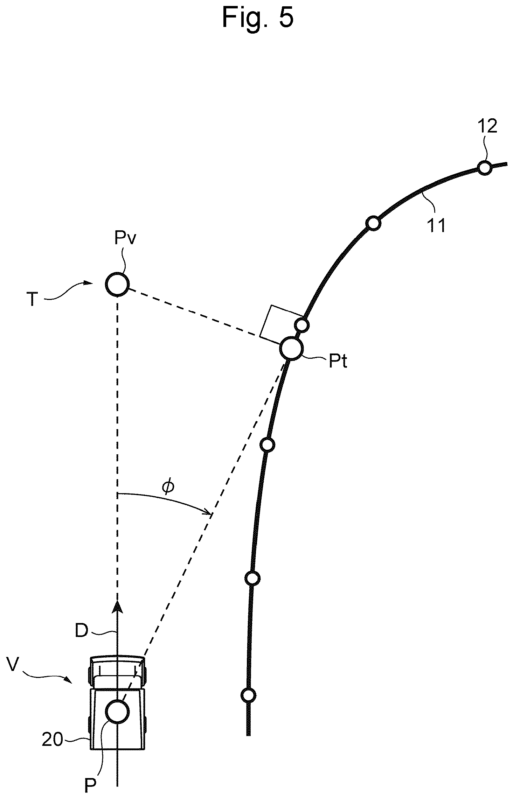

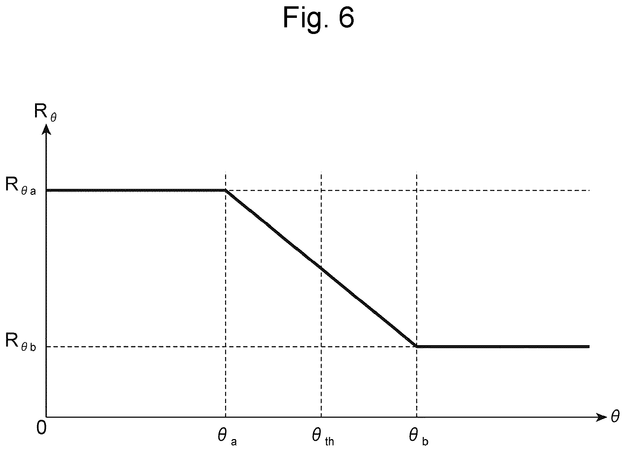

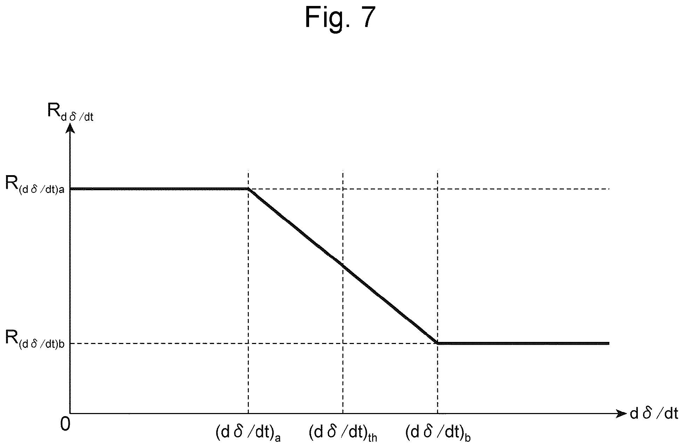

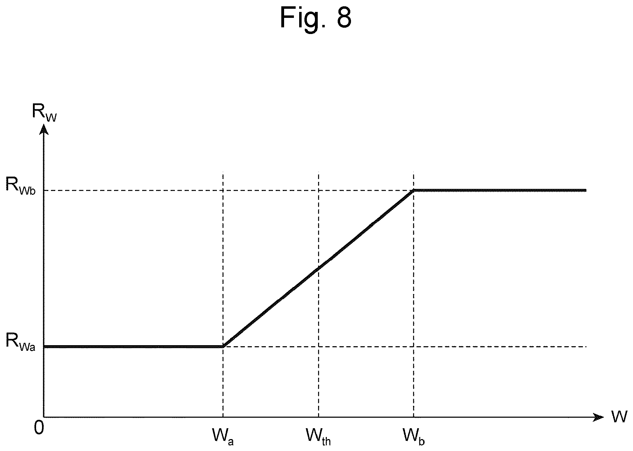

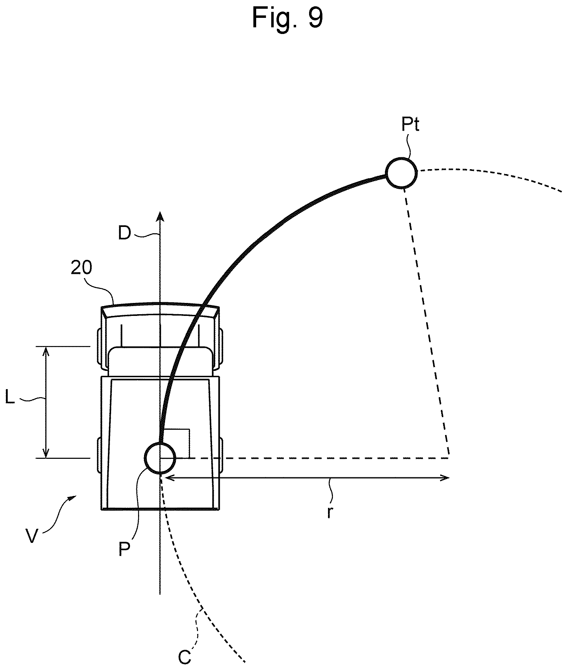

Fig. 3 is a block diagram showing the configuration of the travel system 200 for the hauling vehicle 20 according to Embodiment 1. Fig. 4 shows the road information stored in the storage device 210 shown in Fig. 3. Fig. 5 illustrates virtual and target points. Fig. 6 shows the relationship between the rate of change in forward travel time and the curvature. Fig. 7 shows the relationship between the rate of change in forward travel time and the steering angle speed. Fig. 8 shows the relationship between the rate of change in forward travel time and the load. Fig. 9 illustrates one method of calculating the target steering angle value.

The travel system 200 for the hauling vehicle 20 is mounted on the hauling vehicle 20 and lets the hauling vehicle 20 travel along the target trajectory 11. The travel system 200 lets the hauling vehicle 20 travel so that the deviation from the target trajectory 11 is minimized. Alternatively, the travel system 200 lets the hauling vehicle 20 travel so that it passes through the nodes 12 placed on the target trajectory 11.

The travel system 200 for the hauling vehicle 20 has a hardware configuration that includes a storage device 210, a control device 220, a drive device 260, and a sensor group 270.

The storage device 210 includes a nonvolatile storage medium enabling reading and writing of information. The storage device 210 stores an operating system (OS), various control programs, application programs, and databases.

The control device 220 includes a central processing unit (CPU), a random access memory (RAM), and a read only memory (ROM). In the control device 220, the CPU performs calculations according to a program, reads and writes information to a work area, and temporarily stores the program, and implements the functions of the control device 220.

The drive device 260 drives the hauling vehicle 20 so that the hauling vehicle 20 travels. The drive device 260 includes at least a brake device to brake the hauling vehicle 20, a steering motor to change the steering angle of the hauling vehicle 20, and a traveling motor to let the hauling vehicle 20 travel. The drive device 260 operates according to a control command output from the control device 220.

The sensor group 270 includes a plurality of sensors that measure the state of the hauling vehicle 20. The sensor group 270 includes a steering angle sensor 271 that measures the steering angle of the hauling vehicle 20 and an orientation sensor 272 that measures the vehicle orientation of the hauling vehicle 20. The sensor group 270 also includes a position sensor 273 that measures the vehicle position of the hauling vehicle 20, a speed sensor 274 that measures the vehicle speed of the hauling vehicle 20, and a load sensor 275 that measures the amount of load on the hauling vehicle 20. The sensor group 270 outputs the measurement values to the control device 220.

The steering angle sensor 271 may be an angle detection device. The orientation sensor 272 may include an inertial measurement unit (IMU), and may measure the orientation by calculating a time variation in the acquired angular acceleration. The orientation sensor 272 may include a global navigation satellite system (GNSS) receiver, and may measure the vehicle orientation by calculating the acquired locus of vehicle positions. The position sensor 273 may include a GNSS receiver. The speed sensor 274 may be a wheel speed sensor. The speed sensor 274 may measure a vehicle speed by calculating the time variation of the vehicle position acquired by the GNSS receiver. The load sensor 275 may measure the amount of load on the hauling vehicle 20 from the load acting on the suspension of the hauling vehicle 20 and the pressure of the hydraulic fluid in the hydraulic cylinder.

Next, the following describes the functional configuration of the travel system 200 for the hauling vehicle 20.

The storage device 210 stores a curvature indicating the degree of curve of the target trajectory 11, where the curvature is calculated for each of the nodes 12 making up the target trajectory 11. Specifically, the storage device 210 includes a road information storage section 211 that stores information (hereinafter also called "road information") on the haul road 10. As shown in Fig. 4, the road information stored in the road information storage section 211 includes a node ID that identifies each node 12, node information indicating the position coordinates of the node 12, an upper limit speed for the hauling vehicle 20 when it passes through the node 12, and the curvature of the target trajectory 11 at the node 12. The node ID, node information, upper limit speed, and curvature are linked to each other and stored in the road information storage section 211.

The upper limit speed is the maximum speed when the hauling vehicle 20 passes through each node 12. This upper limit speed is determined in advance based on one or both of the curvature and gradient of the target trajectory 11 and the performance limit of the hauling vehicle 20. The curvature is calculated by calculating the reciprocal of the radius of a circle (radius of curvature) passing through a predetermined number of nodes 12. Alternatively, the curvature is calculated by calculating the reciprocal of the turning radius of the hauling vehicle 20, where the turning radius is calculated from the time variation in vehicle orientation or vehicle position.

The control device 220 controls the travel of the hauling vehicle 20 based on the measurement values of the sensor group 270 and the road information stored in the storage device 210. In particular, the control device 220 controls the travel of the hauling vehicle 20 based on the vehicle position measured by the position sensor 273 and the curvature stored in the storage device 210.

The control device 220 has a target point setting section 230, a control target value calculation section 240, and a vehicle control section 250. The target point setting section 230, control target value calculation section 240, and vehicle control section 250 each include a CPU, ROM, and RAM, and each CPU may perform calculations according to a program, read and write information to a work area, and temporarily store the program, and implement their functions.

The vehicle control section 250 controls the travel of the hauling vehicle 20 so that the hauling vehicle 20 travels from the vehicle position to the target point. The vehicle control section 250 generates a control command to control the operation of the drive device 260 according to the control target value calculated by the control target value calculation section 240. The control command includes the amount of steering angle manipulation. That is, the vehicle control section 250 controls the travel of the hauling vehicle 20 according to the target steering angle value calculated by the control target value calculation section 240 so that the hauling vehicle 20 travels from the current vehicle position toward the target point. The control command may further include the amount of brake pedal manipulation or the amount of the accelerator pedal manipulation. The vehicle control section 250 outputs the generated control command to the drive device 260.

The target point setting section 230 sets a target point, through which the hauling vehicle 20 should pass, on the target trajectory 11 ahead of the vehicle position. The target point setting section 230 has a virtual point calculation section 231, a target point calculation section 232, and a changing section 233.

The virtual point calculation section 231 calculates a virtual point, which is the vehicle position when the hauling vehicle 20 is assumed to travel for a predetermined forward travel time with the current vehicle speed and vehicle direction. The virtual point calculation section 231 obtains the road information stored in the storage device 210, the steering angle measured by the steering angle sensor 271, the vehicle orientation measured by the orientation sensor 272, the vehicle position measured by the position sensor 273, the vehicle speed measured by the speed sensor 274, and the amount of load measured by the load sensor 275. The virtual point calculation section 231 calculates a virtual point based on the acquired information.

Specifically, the virtual point calculation section 231 sets the current position of the hauling vehicle 20 as the starting point, and assumes that the hauling vehicle 20 maintains the current vehicle speed and orientation and travels for a predetermined forward travel time. Then, the virtual point calculation section 231 calculates, as a virtual point, the vehicle position after the traveling. Fig. 5 shows an example where the hauling vehicle 20 is currently at vehicle position P and is traveling at vehicle speed V toward the vehicle orientation D. In the example in Fig. 5, assuming that the hauling vehicle 20 maintains this state and travels for a forward travel time T, the position of the hauling vehicle 20 will be at point Pv. The virtual point calculation section 231 calculates this point Pv as a virtual point.

Alternatively, the virtual point calculation section 231 calculates the orientation change rate from the time variation in the vehicle orientation or the time variation in the steering angle. Then, the virtual point calculation section 231 may set the current position of the hauling vehicle 20 as the starting point, and assumes that the hauling vehicle 20 maintains the current vehicle speed and orientation change rate and travels for a predetermined forward travel time. Then, the virtual point calculation section 231 may calculate, as a virtual point, the vehicle position after the traveling.

The target point calculation section 232 calculates the target point from the virtual point. The target point calculation unit 232 calculates the target point from the road information stored in the storage device 210 and the virtual point calculated by the virtual point calculation section 231. Specifically, the target point calculation section 232 calculates, as the target point, the foot of the perpendicular line (the intersection of the perpendicular line and the target trajectory 11) that is drawn from the virtual point to the target trajectory 11. In the example in Fig. 5, the target point calculation section 232 calculates the point Pt, which is the foot of the perpendicular line drawn from the virtual point Pv to the target trajectory 11, as the target point. Alternatively, the target point calculation section 232 may calculate the point of a node 12 closest to the virtual point as the target point.

The target point calculated by the target point calculation section 232 depends on the virtual point calculated by the virtual point calculation section 231. The virtual point calculated by the virtual point calculation section 231 depends on the forward travel time. The forward travel time is a parameter set in advance to calculate the virtual point and the target point. If the forward travel time is short, the virtual point will be a position close to the current position of the hauling vehicle 20, and the target point will be a position close to the current position of the hauling vehicle 20. If the forward travel time is long, the virtual point will be a position far from the current position of the hauling vehicle 20, and the target point will be a position far from the current position of the hauling vehicle 20. If the target point is located close to the current position of the hauling vehicle 20, then the hauling vehicle 20 can travel so as to approach the target trajectory 11 quickly. If the target point is located far from the current position of the hauling vehicle 20, then the hauling vehicle 20 can travel so as to approach the target trajectory 11 slowly (over time).

The changing section 233 changes the forward travel time. The changing section 233 changes the forward travel time by multiplying the preset default forward travel time by the change rate. The change rate of the forward travel time is a number greater than zero and less than or equal to 1. That is, if the change rate of the forward travel time is large, the forward travel time after the change becomes long. If the change rate of the forward travel time is small, the forward travel time after the change becomes short.

The changing section 233 determines the change rate of the forward travel time according to the curvature at the node 12 ahead of the current position of the hauling vehicle 20. The node 12 ahead of the current position of the hauling vehicle 20 may be the node 12 closest to the vehicle position among the nodes 12 ahead of the current position of the hauling vehicle 20, or it may be the node 12 that is the closest to the virtual point.

Specifically, the changing section 233 has a preset relationship between the curvature θ at a node 12 ahead of the vehicle position and the change rate R_{θ} of the forward travel time, as shown in Fig. 6. Fig. 6 shows an example where, in the range of the curvature θ being greater than or equal to 0 and less than θₐ, the forward travel time change rate is R_{θ} that is constant at a relatively large value R_{θa}. In the example of Fig. 6, in the range of the curvature θ being equal to or greater than θ_{b}, the forward travel time change rate is R_{θ} that is constant at a relatively small value R_{θb}. In the example in Fig. 6, the change rate R_{θ} of the forward travel time is inversely proportional to the curvature θ in the range where the curvature θ is greater than or equal to θₐ and less than θ_{b}. In Fig. 6, the change rate R_{θ} of the forward travel time is inversely proportional to the curvature θ because the larger the curvature θ, the closer the target point is required to the vehicle position, and to set the target point close to the vehicle position, the change rate R_{θ} has to be made small.

In the example of Fig. 6, the minimum value R_{θb} and maximum value R_{θa} of the change rate R_{θ} may be calculated as follows. Specifically, as a result of running the hauling vehicle 20 with a fixed forward travel time or of running the vehicle in a simulation, there may be a value of the change rate where no deviation from the target trajectory 11 occurs because the steering is not performed in time, while the curvature θ is large. This value of the change rate may be calculated as the minimum value R_{θb}. Of these results, the value of change rate that does not cause deviation from the target trajectory 11 due to meandering even when the curvature θ is small may be calculated as the maximum value R_{θa}. Fig. 6 shows the example where the threshold value θₜₕ of curvature θ is set within the range of curvature θ greater than or equal to θₐ and less than θ_{b}.

As shown in Fig. 6, when the curvature at the node 12 ahead of the current position of the hauling vehicle 20 is less than the threshold value, the changing section 233 determines the change rate to a larger value than when the curvature is equal to or greater than the threshold value. This allows the changing section 233 to change the forward travel time to a longer time when the curvature at the node 12 ahead of the current position of the hauling vehicle 20 is less than the threshold value than when the curvature is equal to or greater than the threshold value. The virtual point calculation section 231 calculates the virtual point using the forward travel time, which is changed to a longer time than when the curvature is equal to or greater than the threshold value. The target point calculation section 232 calculates the target point based on the virtual point that is calculated using the forward travel time, which has been changed to a longer time than when the curvature is equal to or greater than the threshold value. **In** this way, if the curvature at the node 12 ahead of the current position of the hauling vehicle 20 is less than the threshold value, the target point calculation section 232 calculates the target point at a location farther from the vehicle position than if the curvature is equal to or greater than the threshold value. This means that, in this case, the target point setting section 230 sets the target point at a position farther from the vehicle position than if the curvature is equal to or greater than the threshold value.

When the curvature at the node 12 ahead of the current position of the hauling vehicle 20 is equal to or greater than the threshold value, the changing section 233 determines the change rate to a smaller value than when the curvature is less than the threshold value. This allows the changing section 233 to change the forward travel time to a shorter time when the curvature at the node 12 ahead of the current position of the hauling vehicle 20 is equal to or greater than the threshold value than when the curvature is less than the threshold value. The virtual point calculation section 231 calculates the virtual point using the forward travel time, which is changed to a shorter time than when the curvature is less than the threshold value. The target point calculation section 232 calculates the target point based on the virtual point that is calculated using the forward travel time, which has been changed to a shorter time than when the curvature is less than the threshold value. **In** this way, if the curvature at the node 12 ahead of the current position of the hauling vehicle 20 is equal to or greater than the threshold value, the target point calculation section 232 calculates the target point at a location closer to the vehicle position than if the curvature is less than the threshold value. This means that, in this case, the target point setting section 230 sets the target point at a position closer to the vehicle position than if the curvature is less than the threshold value.

The changing section 233 may determine the change rate of the forward travel time according to the current steering angle speed of the hauling vehicle 20. The steering angle speed is the time variation of the steering angle measured by the steering angle sensor 271. The steering angle speed may be calculated by the steering angle sensor 271, or may be calculated by the target point setting section 230 (or the changing section 233).

Specifically, the changing section 233 has a preset relationship between the steering angle speed dδ/dt of the hauling vehicle 20 and the change rate R_{(dδ/dt)} of the forward travel time, as shown in Fig. 7. The relationship between the steering angle speed dδ/dt and the change rate R_{(dδ/dt)} shown in Fig. 7 can be expressed in a graph having a similar shape to the relationship between the curvature θ and the change rate R_{θ} shown in Fig. 6. In Fig. 7, the change rate of the forward travel time R_{(dδ/dt)} is inversely proportional to the steering angle speed dδ/dt. This is because the faster the steering angle speed dδ/dt is, the faster the wheel direction changes and the faster the vehicle can approach the target trajectory 11. This requires setting the target point closer to the vehicle position. To set the target point closer to the vehicle position, the change rate R_{(dδ/dt)} is required to be set smaller.

In the example of Fig. 7, the minimum value R_{(dδ/dt)b} and maximum value R_{(dδ/dt)a} of the change rate R_{(dδ/dt)} may be calculated as follows. Specifically, as a result of running the hauling vehicle 20 with a fixed forward travel time or of running the vehicle in a simulation, there may be a value of the change rate where no deviation from the target trajectory 11 occurs because the steering is not performed in time, while the steering angle speed dδ/dt is high. This value of the change rate may be calculated as the minimum value R_{(dδ/dt)b}. Of these results, the value of change rate that does not cause deviation from the target trajectory 11 due to meandering even when the steering angle speed dδ/dt is low may be calculated as the maximum value R_{(dδ/dt)a}. Fig. 7 shows the example where the threshold value (dδ/dt)ₜₕ of steering angle speed dδ/dt is set within the range of steering angle speed dδ/dt that is greater than or equal to (dδ/dt)ₐ and less than (dδ/dt)_{b}.

As shown in Fig. 7, when the current steering angle speed of the hauling vehicle 20 is less than the threshold value, the changing section 233 determines the change rate to a larger value than when the steering angle speed is equal to or greater than the threshold value. This allows the changing section 233 to change the forward travel time to a longer time when the current steering angle speed of the hauling vehicle 20 is less than the threshold value than when the steering angle speed is equal to or greater than the threshold value. The virtual point calculation section 231 calculates the virtual point using the forward travel time, which is changed to a longer time than when the steering angle speed is equal to or greater than the threshold value. The target point calculation section 232 calculates the target point based on the virtual point that is calculated using the forward travel time, which has been changed to a longer time than when the steering angle speed is equal to or greater than the threshold value. In this way, if the current steering angle speed of the hauling vehicle 20 is less than the threshold value, the target point calculation section 232 calculates the target point at a location farther from the vehicle position than if the steering angle speed is equal to or greater than the threshold value. This means that, in this case, the target point setting section 230 sets the target point at a position farther from the vehicle position than if the steering angle speed is equal to or greater than the threshold value.

When the current steering angle speed of the hauling vehicle 20 is equal to or greater than the threshold value, the changing section 233 determines the change rate to a smaller value than when the steering angle speed is less than the threshold value. This allows the changing section 233 to change the forward travel time to a shorter time when the current steering angle speed of the hauling vehicle 20 is equal to or greater than the threshold value than when the steering angle speed is less than the threshold value. The virtual point calculation section 231 calculates the virtual point using the forward travel time, which is changed to a shorter time than when the steering angle speed is less than the threshold value. The target point calculation section 232 calculates the target point based on the virtual point that is calculated using the forward travel time, which has been changed to a shorter time than when the steering angle speed is less than the threshold value. **In** this way, if the current steering angle speed of the hauling vehicle 20 is equal to or greater than the threshold value, the target point calculation section 232 calculates the target point at a location closer to the vehicle position than if the steering angle speed is less than the threshold value. This means that, in this case, the target point setting section 230 sets the target point at a position closer to the vehicle position than if the steering angle speed is less than the threshold value.

The changing section 233 may determine the change rate of the forward travel time according to the current amount of load on the hauling vehicle 20.

Specifically, the changing section 233 has a preset relationship between the load W on the hauling vehicle 20 and the change rate R_{w} of the forward travel time, as shown in Fig. 8. The relationship between the load W and change rate R_{W} shown in Fig. 8 indicates that the change rate R_{W} of forward travel time is constant at a relatively small value R_{Wa} in the range where the load W is equal to or greater than zero and less than Wₐ. In the example in Fig. 8, the change rate R_{w} of forward travel time is constant at a relatively large value R_{Wb} in the range where the load W is equal to or greater than W_{b}. In the example in Fig. 8, the change rate R_{w} of the forward travel time is proportional to the load W in the range where the load W is greater than or equal to Wₐ and less than W_{b}. In Fig. 8, the change rate R_{W} of the forward travel time is proportional to the load W, and this is because the heavier the load W is, the longer it takes for the hauling vehicle 20 to change the orientation of the vehicle after the wheel direction changes, and the more slowly (over time) the vehicle can approach the target trajectory 11. This requires setting the target point farther from the vehicle position. In order to set the target point at a position far from the vehicle position, the change rate R_{W} must be large.

In the example of Fig. 8, the minimum value R_{Wa} and maximum value R_{Wb} of the change rate R_{W} may be calculated as follows. Specifically, as a result of running the hauling vehicle 20 with a fixed forward travel time or of running the vehicle in a simulation, there may be a value of the change rate where no deviation from the target trajectory 11 occurs because the steering is not performed in time, while the load W is light. This value of the change rate may be calculated as the minimum value R_{Wa}. Of these results, the value of change rate that does not cause deviation from the target trajectory 11 due to meandering even when the load W is heavy may be calculated as the maximum value R_{Wb}. Fig. 8 shows the example where the threshold value Wₜₕ of load W is set within the range of load W greater than or equal to Wₐ and less than W_{b}.

As shown in Fig. 8, when the current load of the hauling vehicle 20 is less than the threshold value, the changing section 233 determines the change rate to a smaller value than when the load is equal to or greater than the threshold value. This allows the changing section 233 to change the forward travel time to a shorter time when the current load of the hauling vehicle 20 is less than the threshold value than when the load is equal to or greater than the threshold value. The virtual point calculation section 231 calculates the virtual point using the forward travel time, which is changed to a shorter time than when the load is equal to or greater than the threshold value. The target point calculation section 232 calculates the target point based on the virtual point that is calculated using the forward travel time, which has been changed to a shorter time than when the load is equal to or greater than the threshold value. In this way, if the current load of the hauling vehicle 20 is less than the threshold value, the target point calculation section 232 calculates the target point at a location closer to the vehicle position than if the load is equal to or greater than the threshold value. This means that, in this case, the target point setting section 230 sets the target point at a position closer to the vehicle position than if the load is equal to or greater than the threshold value.

When the current load of the hauling vehicle 20 is equal to or greater than the threshold value, the changing section 233 determines the change rate to a larger value than when the load is less than the threshold value. This allows the changing section 233 to change the forward travel time to a longer time when the current load of the hauling vehicle 20 is equal to or greater than the threshold value than when the load is less than the threshold value. The virtual point calculation section 231 calculates the virtual point using the forward travel time, which is changed to a longer time than when the load is less than the threshold value. The target point calculation section 232 calculates the target point based on the virtual point that is calculated using the forward travel time, which has been changed to a longer time than when the load is less than the threshold value. In this way, if the current load of the hauling vehicle 20 is equal to or greater than the threshold value, the target point calculation section 232 calculates the target point at a location farther from the vehicle position than if the load is less than the threshold value. This means that, in this case, the target point setting section 230 sets the target point at a position farther from the vehicle position than if the load is less than the threshold value.

The changing section 233 may also use at least one of the following change rates including: a change rate (Re) determined according to the curvature at node 12 ahead of the current position of the hauling vehicle 20; a change rate (R_{(dδ/dt)}) determined according to the steering angle speed; and a change rate (R_{w}) determined according to the load, to change the forward travel time. For instance, the changing section 233 may change the forward travel time using the product of a change rate (Re) determined according to the curvature; a change rate (R_{(dδ/dt)}) determined according to the steering angle speed; and a change rate (R_{w}) determined according to the load.

The control target value calculation section 240 calculates a control target value of the drive device 260 to run the hauling vehicle 20 from the vehicle position to the target point. The control target value calculation section 240 acquires the vehicle orientation measured by the orientation sensor 272, the vehicle position measured by the position sensor 273, the vehicle speed measured by the speed sensor 274, and the amount of load measured by the load sensor 275, and the virtual point, target point, and forward travel time calculated by the target point setting section 230. The control target value calculation section 240 calculates the control target value of the drive device 260 based on these acquired information. The control target value calculation section 240 calculates a control target value of the steering angle (hereinafter also called "target steering angle value") that is a control target value of the drive device 260. The control target value calculation section 240 may also calculate a control target value of braking deceleration for vehicle speed or a control target value of acceleration for vehicle speed that is a control target value of the drive device 260.

Specifically, as shown in Fig. 5, the control target value calculation section 240 calculates the amount of change in vehicle orientation required to run the hauling vehicle 20 from the current vehicle position toward the target point (hereinafter also called "required orientation change") based on the current vehicle position, vehicle orientation, virtual point and target point of the hauling vehicle 20. In the example of Fig. 5, the required orientation change ϕ is shown as an angle formed by a straight line passing through the vehicle position P and the virtual point Pv and a straight line passing through the vehicle position P and the target point Pt.

The control target value calculation section 240 needs to change the vehicle orientation by the required orientation change ϕ in the forward travel time T. The control target value calculation section 240 uses the following equation (1) to calculate the required orientation change rate γ, which is the rate of change in the required orientation change ϕ per unit time.
[Math. 1] $γ = \frac{φ}{T}$ (1)

Then, the control target value calculation section 240 calculates the target steering angle value δ using the following equation (2). In equation (2), L denotes the wheelbase length of the hauling vehicle 20, A(W) denotes a stability factor that changes with the load W, V denotes the vehicle speed of the hauling vehicle 20, and γ is the required orientation change rate that is calculated by equation (1).
[Math. 2] $δ = \left(1+A\left(W\right){V}^{2}\right) \frac{L}{V} γ$ (2)

The target steering angle value δ is proportional to the required orientation change rate γ, as shown in equation (2). The required orientation change rate γ is inversely proportional to the forward travel time T, as shown in equation (1). Therefore, the target steering angle value δ is inversely proportional to the forward travel time T.

As shown in equation (2), the target steering angle value δ becomes larger as the vehicle speed V of the hauling vehicle 20 becomes faster, and becomes smaller as the vehicle speed V becomes slower. That is, the lower the vehicle speed of the hauling vehicle 20 is, the smaller the target steering angle value is calculated by the control target value calculation section 240. This allows the travel system 200 for the hauling vehicle 20 to calculate a target steering angle value for the hauling vehicle 20 traveling at various vehicle speeds, such that tracking errors on the target trajectory 11 can be suppressed. Thus, the travel system 200 for the hauling vehicle 20 keeps tracking performance of the hauling vehicle 20 to the target trajectory while the hauling vehicle 20 travels at various speeds, and also suppresses the vehicle speed reduction. The travel system 200 for the hauling vehicle 20 therefore suppresses a decrease in productivity.

The stability factor A(W) becomes larger as the load W on the hauling vehicle 20 becomes heavier, and becomes smaller as the load W becomes lighter. Therefore, as shown in equation (2), the target steering angle value δ becomes larger as the load W on the hauling vehicle 20 is heavier, and becomes smaller as the load W is lighter. That is, the lighter the load on the hauling vehicle 20 is, the smaller the target steering angle value is calculated by the control target value calculation section 240. This allows the travel system 200 for the hauling vehicle 20 to calculate a target steering angle value for the hauling vehicle 20 traveling with various amounts of load, such that tracking errors on the target trajectory 11 can be suppressed. Thus, the travel system 200 for the hauling vehicle 20 keeps tracking performance of the hauling vehicle 20 to the target trajectory while the hauling vehicle 20 travels with at various amounts of load, and also suppresses the vehicle speed reduction. The travel system 200 for the hauling vehicle 20 therefore suppresses a decrease in productivity.

The control target value calculation section 240 may calculate the target steering angle value using the following method. Fig. 9 shows a circle C that passes through the vehicle position P of the hauling vehicle 20 and the target point Pt and is in contact with a straight line along the vehicle orientation D. The control target value calculation section 240 calculates the radius r of this circle C. The control target value calculation section 240 may then calculate the target steering angle value δ using the following equation (3) instead of equations (1) and (2). In equation (3), L denotes the wheelbase length of the hauling vehicle 20, A(W) denotes the stability factor that varies with the load W, and V denotes the vehicle speed of the hauling vehicle 20.
[Math. 3] $δ = \left(1+A\left(W\right){V}^{2}\right) \frac{L}{r}$ (3)

The target steering angle value δ is inversely proportional to the radius r, as shown in equation (3). The radius r becomes larger as the target point Pt is farther from the vehicle position P. The longer the forward travel time T, the farther the target point Pt is from the vehicle position P. That is, the radius r becomes larger as the forward travel time T becomes longer. Therefore, the target steering angle value δ is inversely proportional to the forward travel time T.

As described above, the target point setting section 230 changes the forward travel time to a shorter time when the curvature at the node 12 ahead of the current position of the hauling vehicle 20 is equal to or greater than the threshold value than when the curvature is less than the threshold value, and sets a target point at a position closer to the vehicle position than when the curvature is less than the threshold value. In this case, the control target value calculation section 240 calculates a larger target steering angle value than when the curvature is less than the threshold value because the forward travel time is changed to a shorter time. The calculated target steering angle value is the sum of the target steering angle value that lets the hauling vehicle approach the target trajectory 11 and the target steering angle value that lets the hauling vehicle 20 follow a change in the target trajectory 11. The calculated target steering angle value allows the hauling vehicle 20 to travel so as to quickly approach the target trajectory 11 in order to suppress the tracking error to the target trajectory 11 even if the response of the steering device deteriorates.

The target point setting section 230 changes the forward travel time to a longer time when the curvature at the node 12 ahead of the current position of the hauling vehicle 20 is less than the threshold value than when the curvature is equal to or greater than the threshold value, and sets a target point at a position farther from the vehicle position than when the curvature is equal to or greater than the threshold value. In this case, the control target value calculation section 240 calculates a smaller target steering angle value than when the curvature is equal to or greater than the threshold value because the forward travel time is changed to a longer time. For the calculated target steering angle value, a target steering angle value that lets the hauling vehicle 20 approach the target trajectory 11 is dominant. The calculated target steering angle value allows the hauling vehicle 20 to travel so as to slowly approach the target trajectory 11 in order to converge the tracking error to the target trajectory 11 stably without meandering even if the response of the steering device deteriorates.

In this way, the control target value calculation section 240 calculates a target steering angle value that suppresses the tracking error to the target trajectory 11, even if the response of the steering device deteriorates, according to the curvature at the node 12 ahead of the current position of the hauling vehicle 20. That is, when the haul road 10 is a turning path where the curvature at the node 12 ahead of the current position of the hauling vehicle 20 is equal to or greater than the threshold value, the traveling system 200 for the hauling vehicle 20 sets a target point at a position close to the vehicle position so that the vehicle does not deviate from the target trajectory 11 without a delay of steering due to the low response of the steering device, and runs the hauling vehicle 20 so as to approach the target trajectory 11 quickly. When the haul road 10 is close to a straight path where the curvature at the node 12 ahead of the current position of the hauling vehicle 20 is less than the threshold value, the traveling system 200 for the hauling vehicle 20 sets a target point at a position far from the vehicle position so that the vehicle does not deviate from the target trajectory 11 with meandering due to the low response of the steering device, and travels the hauling vehicle 20 so as to approach the target trajectory 11 slowly. Thus, the travel system 200 for the hauling vehicle 20 keeps tracking performance of the hauling vehicle 20 to the target trajectory while suppressing a decrease in vehicle speed, even if the response of the steering device deteriorates. The travel system 200 for the hauling vehicle 20 therefore suppresses a decrease in productivity.

As described above, the target point setting section 230 changes the forward travel time to a shorter time when the current steering angle speed of the hauling vehicle 20 is equal to or greater than when the steering angle speed is less than the threshold value, and sets a target point at a position closer to the vehicle position than when the steering angle speed is less than the threshold value. In this case, the control target value calculation section 240 calculates a larger target steering angle value than when the steering angle speed is less than the threshold value because the forward travel time is changed to a shorter time. Similar to the case of the curvature at the node 12 ahead of the vehicle position being equal to or greater than the threshold value, the calculated target steering angle value allows the hauling vehicle 20 to travel so as to quickly approach the target trajectory 11 in order to suppress the tracking error to the target trajectory 11 even if the response of the steering device deteriorates.

The target point setting section 230 changes the forward travel time to a longer time when the current steering angle speed of the hauling vehicle 20 is less than the threshold value than when the steering angle speed is equal to or greater than the threshold value, and sets a target point at a position farther from the vehicle position than when the steering angle speed is equal to or greater than the threshold value. In this case, the control target value calculation section 240 calculates a smaller target steering angle value than when the steering angle speed is equal to or greater than the threshold value because the forward travel time is changed to a longer time. Similar to the case of the curvature at the node 12 ahead of the vehicle position being less than the threshold value, the calculated target steering angle value allows the hauling vehicle 20 to travel so as to slowly approach the target trajectory 11 stably without meandering in order to converge the tracking error to the target trajectory 11.

In this way, the control target value calculation section 240 calculates a target steering angle value that suppresses the tracking error to the target trajectory 11, even if the response of the steering device deteriorates, according to the current steering angle speed of the hauling vehicle 20. Thus, the travel system 200 for the hauling vehicle 20 keeps tracking performance of the hauling vehicle 20 to the target trajectory while suppressing a decrease in vehicle speed, even if the response of the steering device deteriorates. The travel system 200 for the hauling vehicle 20 therefore suppresses a decrease in productivity.

The heavier the load of the hauling vehicle 20, the longer it takes for the hauling vehicle 20 to change the orientation (vehicle orientation) after the wheels change the direction. That is, the heavier the load of the hauling vehicle 20, the slower the change in vehicle orientation even at the same steering angle, which may reduce the response of the steering device. As described above, the target point setting section 230 changes the forward travel time to a longer time when the current load on the hauling vehicle 20 is equal to or greater than when the load is less than the threshold value, and sets a target point at a position farther from the vehicle position than when the load is less than the threshold value. In this case, the control target value calculation section 240 calculates a smaller target steering angle value than when the load is less than the threshold value because the forward travel time is changed to a longer time. Similar to the case of the curvature at the node 12 ahead of the vehicle position being less than the threshold value, the calculated target steering angle value allows the hauling vehicle 20 to travel so as to slowly approach the target trajectory 11 stably without meandering in order to converge the tracking error to the target trajectory 11.

The target point setting section 230 changes the forward travel time to a shorter time when the current load on the hauling vehicle 20 is less than the threshold value than when the load is equal to or greater than the threshold value, and sets a target point at a position closer to the vehicle position than when the load is equal to or greater than the threshold value. In this case, the control target value calculation section 240 calculates a larger target steering angle value than when the load is equal to or greater than the threshold value because the forward travel time is changed to a shorter time. Similar to the case of the curvature at the node 12 ahead of the vehicle position being equal to or greater than the threshold value, the calculated target steering angle value allows the hauling vehicle 20 to travel so as to quickly approach the target trajectory 11 in order to suppress the tracking error to the target trajectory 11 even if the response of the steering device deteriorates.

In this way, the control target value calculation section 240 calculates a target steering angle value that suppresses the tracking error to the target trajectory 11, even if the response of the steering device deteriorates, according to the current load on the hauling vehicle 20. Thus, the travel system 200 for the hauling vehicle 20 keeps tracking performance of the hauling vehicle 20 to the target trajectory while suppressing a decrease in vehicle speed, even if the response of the steering device deteriorates. The travel system 200 for the hauling vehicle 20 therefore suppresses a decrease in productivity.

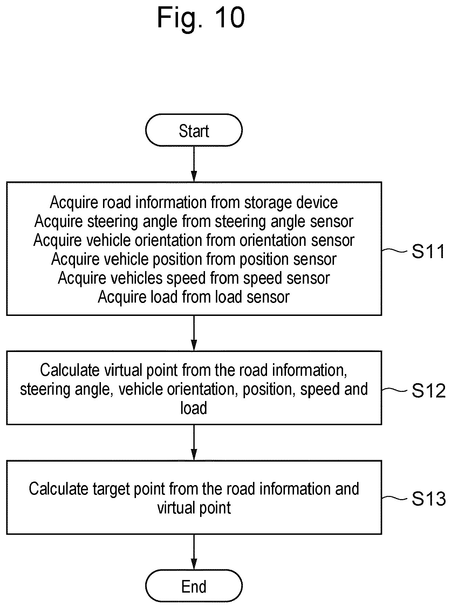

Fig. 10 is a flowchart of the target point calculation process performed by the target point setting section 230 shown in Fig. 3.

In step S11, the target point setting section 230 acquires road information on the haul road 10 from the storage device 210. The target point setting section 230 acquires the steering angle of the hauling vehicle 20 from the steering angle sensor 271. The target point setting section 230 acquires the vehicle orientation of the hauling vehicle 20 from the orientation sensor 272. The target point setting section 230 acquires the vehicle position of the hauling vehicle 20 from the position sensor 273. The target point setting section 230 acquires the vehicle speed of the hauling vehicle 20 from the speed sensor 274. The target point setting section 230 acquires the load on the hauling vehicle 20 from the load sensor 275.

In step S12, the target point setting section 230 calculates a virtual point from the acquired road information, steering angle, vehicle orientation, vehicle position, vehicle speed, and load. At this time, the target point setting section 230 changes the forward travel time according to the curvature included in the acquired road information, the steering angle speed calculated from the steering angle, and/or the load, and calculates the virtual point.

In step S13, the target point setting section 230 calculates a target point from the acquired road information and the calculated virtual point. Thereafter, the target point setting section 230 ends the process shown in Fig. 10.

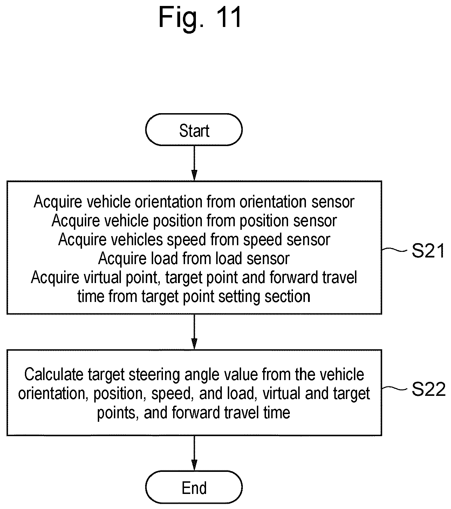

Fig. 11 is a flowchart of the target steering angle value calculation process performed by the control target value calculation section 240 shown in Fig. 3.

In step S21, the control target value calculation section 240 acquires the vehicle orientation of the hauling vehicle 20 from the orientation sensor 272. The control target value calculation section 240 acquires the vehicle position of the hauling vehicle 20 from the position sensor 273. The control target value calculation section 240 acquires the vehicle speed of the hauling vehicle 20 from the speed sensor 274. The control target value calculation section 240 acquires the load on the hauling vehicle 20 from the load sensor 275. The control target value calculation section 240 acquires the virtual point, target point, and forward travel time from the target point setting section 230.

In step S22, the control target value calculation section 240 calculates the target steering angle value from the acquired vehicle orientation, vehicle position, vehicle speed, load, virtual point, target point, and forward travel time. Thereafter, the control target value calculation section 240 ends the process shown in Fig. 11.

In this way, the travel system 200 for hauling vehicle 20 of Embodiment 1 calculates a target steering angle value that suppresses the tracking error to the target trajectory 11, even if the response of the steering device deteriorates, according to at least one of the curvature of the target trajectory 11, the steering angle speed of the hauling vehicle 20, and the load on the hauling vehicle 20. Thus, the travel system 200 for hauling vehicle 20 of Embodiment 1 keeps tracking performance of the hauling vehicle 20 to the target trajectory while suppressing a decrease in vehicle speed. The travel system 200 for hauling vehicle 20 of Embodiment 1 suppresses a decrease in productivity.

### [Embodiment 2]

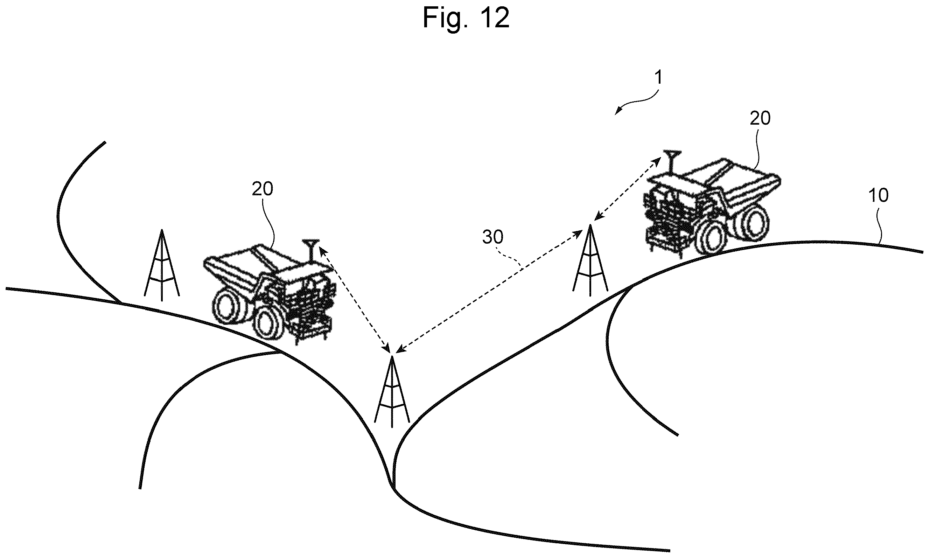

Referring to Figs. 12 to 14, the following describes a travel system 200 for a hauling vehicle 20 according to Embodiment 2. The following descriptions on the travel system 200 for hauling vehicle 20 of Embodiment 2 omit the descriptions on similar configurations and operations those in Embodiment 1.

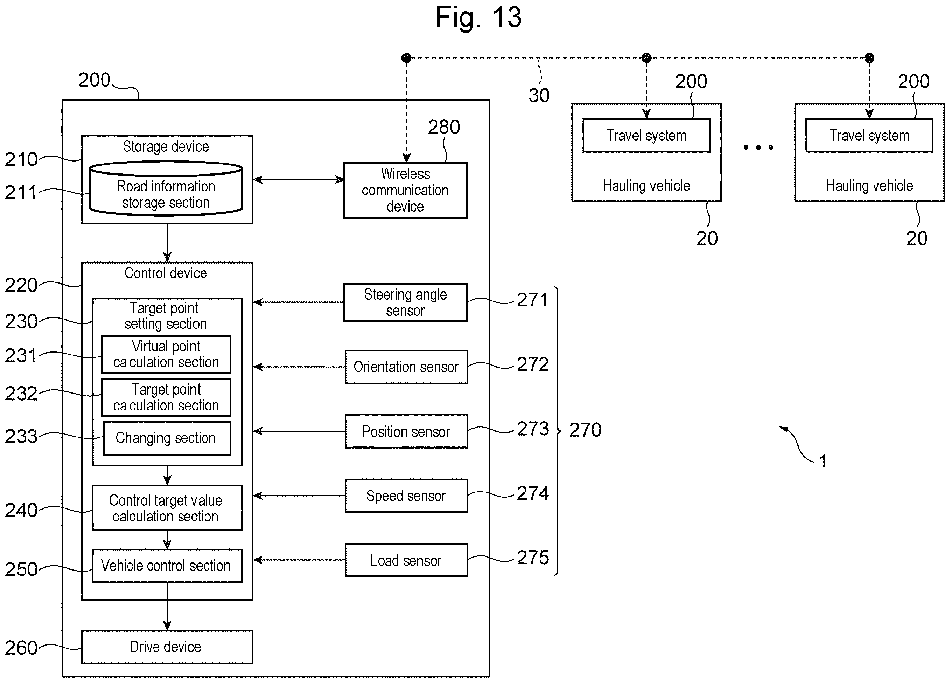

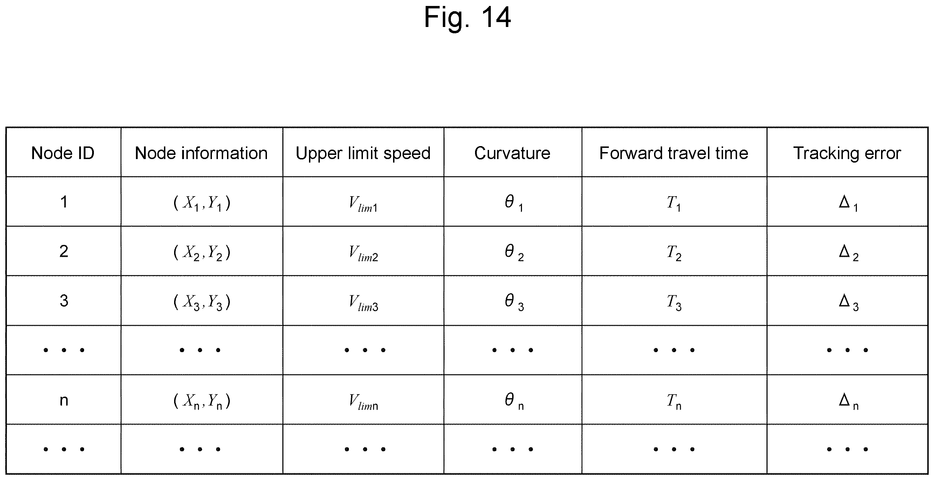

Fig. 12 describes a hauling system 1 according to Embodiment 2. Fig. 13 is a block diagram showing the configuration of the travel system 200 for the hauling vehicle 20 according to Embodiment 2. Fig. 14 shows the road information stored in the storage device 210 shown in Fig. 13.

As shown in Fig. 12, in the hauling system 1 in Embodiment 2, a plurality of hauling vehicles 20 is connected via a wireless communication line 30, and the plurality of hauling vehicles 20 shares the road information. As shown in Fig. 13, the travel system 200 for the hauling vehicle 20 in Embodiment 2 includes a wireless communication device 280.

The wireless communication device 280 communicates with another hauling vehicle 20 traveling along the target trajectory 11 via the wireless communication line 30. The wireless communication device 280 transmits the forward travel time set in the target point setting section 230 (or the changed forward travel time if it was changed by the changing section 233) and the tracking error to the other hauling vehicle 20. If there are multiple other hauling vehicles 20, the wireless communication device 280 transmits the forward travel time and tracking error to each of these hauling vehicles 20.

The tracking error may be the length of a perpendicular line drawn from the vehicle position of the hauling vehicle 20 to the target trajectory 11. As shown in Fig. 14, the forward travel time and tracking error may be calculated for each node 12 by the target point setting section 230, and may be linked with the node IDs, for example, and be stored in the storage device 210 as part of the road information.

The wireless communication device 280 receives the forward travel time and tracking error set in another hauling vehicle 20 from the other hauling vehicle 20. If there are multiple other hauling vehicles 20, the wireless communication device 280 receives the forward travel time and tracking error from each of these hauling vehicles 20. The wireless communication device 280 extracts the forward travel time and tracking error with the smallest tracking error from the received forward travel time and tracking error and the forward travel time and tracking error stored in the storage device 210. The wireless communication device 280 stores the extracted forward travel time and tracking error in the storage device 210 and updates the road information stored in the storage device 210. The road information is updated in the same way also in the travel system 200 for the other hauling vehicles 20.

The target point setting section 230 in Embodiment 2 updates the change rate of the set forward travel time so that the difference between the set forward travel time (including the forward travel time after the change by the changing section 233) and the forward travel time updated by the wireless communication device 280 and stored in the storage unit 210 falls within a predetermined acceptable range. The change rate in the forward travel time to be updated includes at least one of: the change rate of the forward travel time with respect to the above-mentioned curvature; the change rate of the forward travel time with respect to the above-mentioned steering angle speed; and the change rate of the forward travel time with respect to the above-mentioned load.

The target point setting section 230 of Embodiment 2 calculates the tracking error for each node 12. The target point setting section 230 compares the calculated tracking error with the tracking error updated by the wireless communication device 280 and stored in the storage unit 210. If the calculated tracking error is smaller than the tracking error stored in the storage device 210, the target point setting section 230 stores the calculated tracking error and forward travel time in the storage device 210 to update the road information stored in the storage device 210.

Thus, the travel system 200 for hauling vehicle 20 in Embodiment 2 enables the share of the forward travel time with the smallest tracking error among the other hauling vehicles 20. This allows the travel system 200 for hauling vehicle 20 of Embodiment 2 to travel the hauling vehicles 20 while suppressing the tracking error to the target trajectory 11 to the maximum extent possible. For the travel system 200 for hauling vehicle 20, there are cases where an optimum change rate in the forward travel time may not be set in advance, or where the target trajectory 11 may be changed while the hauling vehicle 20 is traveling. Even in such a case, the travel system 200 for hauling vehicle 20 of Embodiment 2 updates the forward travel time with a small tracking error by receiving it from the other hauling vehicle 20 while the hauling vehicle 20 is traveling, and calculates the virtual point and target point. Thus, the travel system 200 for the hauling vehicle 20 of Embodiment 2 also keeps tracking performance of the hauling vehicle 20 to the target trajectory while suppressing a decrease in vehicle speed, even if the response of the steering device deteriorates. The travel system 200 for hauling vehicle 20 of Embodiment 2 further suppresses a decrease in productivity.

### Reference Signs List

- 1: Hauling system
- 11: Target trajectory
- 12: Node
- 20: Hauling vehicle
- 200: Travel system
- 210: Storage device
- 220: Control device
- 230: Target point setting section
- 231: Virtual point calculation section
- 232: Target point calculation section
- 233: Changing section
- 240: Control target value calculation section
- 250: Vehicle control section
- 271: Steering angle sensor
- 272: Orientation sensor
- 273: Position sensor
- 274: Speed sensor
- 275: Load sensor
- 280: Wireless communication device

## Claims

1. A travel system for hauling vehicle (20), the travel system being mounted on a hauling vehicle (20) and letting the hauling vehicle travel along a target trajectory, comprising:
a position sensor (273) that measures a vehicle position of the hauling vehicle (20);
a speed sensor (274) that measures a vehicle speed of the hauling vehicle (20);
an orientation sensor (272) that measures a vehicle orientation of the hauling vehicle (20);
a storage device (210) that stores a curvature indicating a degree of curve of the target trajectory calculated for each of nodes making up the target trajectory; and
a control device (220) that controls travel of the hauling vehicle (20) based on the vehicle position and the curvature,
the control device (220) including:
a target point setting section (230) configured to set a target point, which is a point through which the hauling vehicle (20) passes, on the target trajectory ahead of the vehicle position; and
a vehicle control section (250) configured to control the travel of the hauling vehicle (20) so that the hauling vehicle (20) travels from the vehicle position to the target point,
**characterized in that**
the target point setting section (230) includes:
a virtual point calculation section (231) configured to calculate a virtual point, which is the vehicle position when the hauling vehicle (20) is assumed to travel for a predetermined forward travel time with the current vehicle speed and vehicle orientation;
a target point calculation section (232) configured to calculate the target point from the virtual point; and
a changing section (233) configured to change the forward travel time,
when the curvature at a node ahead of the vehicle position is less than a threshold value set within a range where no deviation of the hauling vehicle (20) from the target trajectory occurs, the changing section (233) changes the forward travel time to be a longer time than the forward travel time when the curvature is equal to or greater than the threshold value,
the virtual point calculation section (231) calculates the virtual point using the forward travel time, which is changed to the longer time, and
the target point calculation section (232) calculates the target point based on the virtual point that is calculated using the forward travel time, which is changed to the longer time, and thus calculates the target point at the position far from the vehicle position.

2. The travel system for hauling vehicle (20) according to claim 1, further comprising a load sensor (275) that measures an amount of load on the hauling vehicle (20), wherein
when the amount of load is less than a threshold value, the target point setting section (230) sets the target point at a position closer to the vehicle position than when the amount of load is equal to or greater than the threshold value.

3. The travel system for hauling vehicle (20) according to claim 1, further comprising a steering angle sensor (271) that measures a steering angle of the hauling vehicle (20), wherein
when a steering angle speed calculated from the steering angle is less than a threshold value, the target point setting section (230) sets the target point at a position farther from the vehicle position than when the steering angle is equal to or greater than the threshold value.

4. The travel system for hauling vehicle (20) according to claim 1, further comprising a steering angle sensor (271) that measures a steering angle of the hauling vehicle (20), wherein
the control device (220) further includes a control target value calculation section (240) configured to calculate a control target value of the steering angle to let the hauling vehicle (20) travel from the vehicle position to the target point,
the lower the vehicle speed of the hauling vehicle (20) is, the smaller the control target value of the steering angle calculated by the control target value calculation section (240) is, and
the vehicle control section (250) controls travel of the hauling vehicle (20) according to the control target value of the steering angle.

5. The travel system for hauling vehicle (20) according to claim 1, further comprising a steering angle sensor (271) that measures a steering angle of the hauling vehicle (20) and a load sensor (275) that measures an amount of load on the hauling vehicle (20), wherein
the control device (220) further includes a control target value calculation section (240) configured to calculate a control target value of the steering angle to let the hauling vehicle (20) travel from the vehicle position to the target point,
the lighter the amount of load is, the smaller the control target value of the steering angle calculated by the control target value calculation section (240) is, and
the vehicle control section (250) controls travel of the hauling vehicle (20) according to the control target value of the steering angle.

6. The travel system for hauling vehicle (20) according to claim 1, further comprising a wireless communication device (280) configured to communicate with another hauling vehicle traveling along the target trajectory, wherein
the wireless communication device (280) transmits the forward travel time to the other hauling vehicle, and also receives the forward travel time set for the other hauling vehicle from the other hauling vehicle.

## Patentansprüche

1. Fahrsystem für ein Transportfahrzeug (20), wobei das Fahrsystem an einem Transportfahrzeug (20) angebracht ist und das Transportfahrzeug entlang einer Zielbewegungsbahn fahren lässt, wobei das Fahrsystem umfasst:
einen Positionssensor (273), der eine Fahrzeugposition des Transportfahrzeugs (20) misst;
einen Geschwindigkeitssensor (274), der eine Fahrzeuggeschwindigkeit des Transportfahrzeugs (20) misst;
einen Orientierungssensor (272), der eine Fahrzeugorientierung des Transportfahrzeugs (20) misst;
eine Speichervorrichtung (210), die eine Krümmung, die einen Grad der Kurve der Zielbewegungsbahn angibt, speichert, die für jeden der Knoten, die die Zielbewegungsbahn bilden, berechnet wird; und
eine Steuervorrichtung (220), die die Fahrt des Transportfahrzeugs (20) auf der Grundlage der Fahrzeugposition und der Krümmung steuert,
wobei die Steuervorrichtung (220) enthält:
einen Zielpunkt-Einstellabschnitt (230), der konfiguriert ist, einen Zielpunkt, der ein Punkt ist, durch den das Transportfahrzeug (20) auf der Zielbewegungsbahn vor der Fahrzeugposition fährt, einzustellen; und
einen Fahrzeugsteuerabschnitt (250), der konfiguriert ist, die Fahrt des Transportfahrzeugs (20) in der Weise zu steuern, dass das Transportfahrzeug (20) von der Fahrzeugposition zu dem Zielpunkt fährt,
**dadurch gekennzeichnet, dass**
der Zielpunkt-Einstellabschnitt (230) enthält:
einen Abschnitt (231) zum Berechnen eines virtuellen Punkts, der konfiguriert ist, einen virtuellen Punkt zu berechnen, der die Fahrzeugposition ist, wenn angenommen wird, dass das Transportfahrzeug (20) während einer vorgegebenen Vorwärtsfahrzeit mit der aktuellen Fahrzeuggeschwindigkeit und Fahrzeugorientierung fährt;
einen Zielpunkt-Berechnungsabschnitt (232), der konfiguriert ist, den Zielpunkt von dem virtuellen Punkt aus zu berechnen; und
einen Änderungsabschnitt (233), der konfiguriert ist, die Vorwärtsfahrzeit zu ändern,
wenn die Krümmung an einem Knoten vor der Fahrzeugposition kleiner als ein Schwellenwert ist, der in einem Bereich eingestellt ist, in dem keine Abweichung des Transportfahrzeugs (20) von der Zielbewegungsbahn auftritt, der Änderungsabschnitt (233) die Vorwärtsfahrzeit zu einer längeren Zeitdauer als der Vorwärtsfahrzeit, wenn die Krümmung gleich dem oder größer als der Schwellenwert ist, ändert,
der Abschnitt (231) zur Berechnung eines virtuellen Punkts den virtuellen Punkt unter Verwendung der Vorwärtsfahrzeit, die zu der längeren Zeit geändert ist, berechnet, und
der Zielpunkt-Berechnungsabschnitt (232) den Zielpunkt auf der Grundlage des virtuellen Punkts, der unter Verwendung der Vorwärtsfahrzeit, die zu der längeren Zeit geändert ist, berechnet worden ist, berechnet und somit den Zielpunkt an der Position fern von der Fahrzeugposition berechnet.

2. Fahrsystem für ein Transportfahrzeug (20) nach Anspruch 1, wobei das Fahrsystem ferner einen Lastsensor (275), der einen Betrag der Last auf das Transportfahrzeug (20) misst, umfasst, wobei
wenn der Betrag der Last kleiner als ein Schwellenwert ist, der Zielpunkt-Einstellabschnitt (230) den Zielpunkt an einer Position näher zu der Fahrzeugposition, als wenn der Betrag der Last gleich dem oder größer als der Schwellenwert ist, einstellt.

3. Fahrsystem für ein Transportfahrzeug (20) nach Anspruch 1, wobei das Fahrsystem ferner einen Lenkwinkelsensor (271), der einen Lenkwinkel des Transportfahrzeugs (20) misst, umfasst, wobei
wenn eine aus den Lenkwinkel berechnete Lenkwinkelgeschwindigkeit kleiner als ein Schwellenwert ist, der Zielpunkt-Einstellabschnitt (230) den Zielpunkt an einer Position weiter von der Fahrzeugposition, als wenn der Lenkwinkel gleich dem oder größer als der Schwellenwert ist, einstellt.

4. Fahrsystem für ein Transportfahrzeug (20) nach Anspruch 1, wobei das Fahrsystem ferner einen Lenkwinkelsensor (271), der einen Lenkwinkel des Transportfahrzeugs (20) misst, umfasst, wobei
die Steuervorrichtung (220) ferner einen Steuerzielwert-Berechnungsabschnitt (240) enthält, der konfiguriert ist, einen Steuerzielwert des Lenkwinkels, um das Transportfahrzeug (20) von der Fahrzeugposition zu dem Zielpunkt fahren zu lassen, zu berechnen,
je niedriger die Fahrzeuggeschwindigkeit des Transportfahrzeugs (20) ist, desto kleiner der durch den Steuerzielwert-Berechnungsabschnitt (240) berechnete Steuerzielwert des Lenkwinkels ist, und
der Fahrzeugsteuerabschnitt (250) die Fahrt des Transportfahrzeugs (20) in Übereinstimmung mit dem Steuerzielwert des Lenkwinkels steuert.

5. Fahrsystem für ein Transportfahrzeug (20) nach Anspruch 1, wobei das Fahrsystem ferner einen Lenkwinkelsensor (271), der einen Lenkwinkel des Transportfahrzeugs (20) misst, und einen Lastsensor (275), der einen Betrag der Last auf das Transportfahrzeug (20) misst, umfasst, wobei
die Steuervorrichtung (220) ferner einen Steuerzielwert-Berechnungsabschnitt (240) enthält, der konfiguriert ist, einen Steuerzielwert des Lenkwinkels, um das Transportfahrzeug (20) von der Fahrzeugposition zu dem Zielpunkt fahren zu lassen, zu berechnen,
je kleiner der Betrag der Last ist, desto kleiner der durch den Steuerzielwert-Berechnungsabschnitt (240) berechnete Steuerzielwert des Lenkwinkels ist, und
der Fahrzeugsteuerabschnitt (250) die Fahrt des Transportfahrzeugs (20) in Übereinstimmung mit dem Steuerzielwert des Lenkwinkel steuert.

6. Fahrsystem für ein Transportfahrzeug (20) nach Anspruch 1, wobei das Fahrsystem ferner eine drahtlose Kommunikationsvorrichtung (280) umfasst, die konfiguriert ist, mit einem anderen Transportfahrzeug, das entlang der Zielbewegungsbahn fährt, zu kommunizieren, wobei
die drahtlose Kommunikationsvorrichtung (280) die Vorwärtsfahrzeit an das andere Transportfahrzeug sendet und außerdem die für das andere Transportfahrzeug eingestellte Vorwärtsfahrzeit von dem anderen Transportfahrzeug empfängt.

## Revendications

1. Système de déplacement pour un véhicule de transport (20), le système de déplacement étant monté sur un véhicule de transport (20) et faisant se déplacer le véhicule de transport le long d'une trajectoire cible, comprenant :
un capteur de position (273) qui mesure une position de véhicule du véhicule de transport (20) ;
un capteur de vitesse (274) qui mesure une vitesse de véhicule du véhicule de transport (20) ;
un capteur d'orientation (272) qui mesure une orientation de véhicule du véhicule de transport (20) ;
un dispositif de stockage (210) qui stocke une courbure indiquant un degré d'une courbe de la trajectoire cible calculée pour chacun de nœuds constituant la trajectoire cible ; et
un dispositif de commande (220) qui commande un déplacement du véhicule de transport (20) sur la base de la position de véhicule et de la courbure,
le dispositif de commande (220) incluant :
une section de définition de point cible (230) configurée pour définir un point cible, qui est un point par lequel passe le véhicule de transport (20), sur la trajectoire cible devant la position du véhicule ; et
une section de commande de véhicule (250) configurée pour commander le déplacement du véhicule de transport (20) de telle sorte que le véhicule de transport (20) se déplace depuis la position de véhicule jusqu'au point cible,
**caractérisé en ce que**
la section de définition de point cible (230) inclut :
une section de calcul de point virtuel (231) configurée pour calculer un point virtuel qui est la position de véhicule quand le véhicule de transport (20) est supposé se déplacer pendant un temps de déplacement vers l'avant prédéterminé avec la vitesse de véhicule actuelle et l'orientation de véhicule ;
une section de calcul de point cible (232) configurée pour calculer le point cible à partir du point virtuel ; et
une section de changement (233) configurée pour changer le temps de déplacement vers l'avant,
quand la courbure à un nœud devant la position de véhicule est inférieure à une valeur seuil définie à l'intérieur d'une plage où ne se produit aucune déviation du véhicule de transport (20) par rapport à la trajectoire cible, la section de changement (233) change le temps de déplacement vers l'avant en un temps plus long que le temps de déplacement vers l'avant quand la courbure est égale ou supérieure à la valeur seuil,
la section de calcul de point virtuel (231) calcule le point virtuel à l'aide du temps de déplacement vers l'avant, qui est changé pour le temps plus long, et
la section de calcul de point cible (202) calcule le point cible sur la base du point virtuel qui est calculé à l'aide du temps de déplacement vers l'avant, lequel est changée pour le temps plus long, et calcule ainsi le point cible à la position éloignée de la position de véhicule.

2. Système de déplacement pour un véhicule transport (20) selon la revendication 1, comprenant en outre un capteur de charge (275) qui mesure une quantité de charge sur le véhicule de transport (20), dans lequel quand la quantité de charge est inférieure à une valeur seuil, la section de définition de point cible (200) définit le point cible à une position plus proche de la position de véhicule que quand la quantité de charge est égale ou supérieure à la valeur seuil.

3. Système de déplacement pour un véhicule de transport (20) selon la revendication 1, comprenant en outre un capteur d'angle de direction (271) qui mesure un angle de direction du véhicule de transport (20), dans lequel quand une vitesse d'angle de direction calculée à partir de l'angle direction est inférieure à une valeur seuil, la section de définition de point cible (230) définit le point cible en tant que position plus éloignée de la position de véhicule que quand l'angle de direction est égal ou supérieur à la valeur seuil.

4. Système de déplacement pour un véhicule de transport (20) selon la revendication 1, comprenant en outre un capteur d'angle de direction (271) qui mesure un angle de direction du véhicule de transport (20), dans lequel le dispositif de commande (220) inclut en outre une section de calcul de valeur cible de commande (240) configurée pour calculer une valeur cible de commande de l'angle de direction pour laisser le véhicule de transport (20) se déplacer depuis la position de véhicule jusqu'au point cible,
plus la vitesse de véhicule du véhicule de transport (20) est faible, plus la valeur cible de commande de l'angle de direction calculée par la section de calcul de valeur cible de commande (240) est petite, et
la section de commande de véhicule (250) commande un déplacement du véhicule de transport (20) selon la valeur cible de commande de l'angle de direction.

5. Système de déplacement pour un véhicule de transport (20) selon la revendication 1, comprenant en outre un capteur d'angle de direction (271) qui mesure un angle de direction du véhicule de transport (20) et un capteur de charge (275) qui mesure une quantité de charge sur le véhicule de transport (20), dans lequel
le dispositif de commande (220) inclut en outre une section de calcul de valeur cible de commande (240) configurée pour calculer une valeur cible de commande de l'angle de direction pour laisser le véhicule de transport (20) se déplacer depuis la position de véhicule jusqu'au point cible,
plus la quantité de charge est légère, plus la valeur cible de commande de l'angle de direction calculée par la section de calcul de valeur cible de commande (240) est petite, et
la section de commande de véhicule (250) commande un déplacement du véhicule de transport (20) selon la valeur cible de commande de l'angle de direction.

6. Système de déplacement pour un véhicule de transport (20) selon la revendication 1, comprenant en outre un dispositif de communication sans fil (280) configuré pour communiquer avec un autre véhicule de transport se déplaçant le long de la trajectoire cible, dans lequel
le dispositif de communication sans fil (280) transmet le temps de déplacement vers l'avant à l'autre véhicule de transport, et reçoit également le temps de déplacement vers l'avant défini pour l'autre véhicule de déplacement depuis l'autre véhicule de déplacement.
